Europäisches Patentamt

(19) European Patent Office

Office européen des brevets

(11) Veröffentlichungsnummer : **0 229 179**
**B1**

(12) **EUROPÄISCHE PATENTSCHRIFT**

(45) Veröffentlichungstag der Patentschrift :
07.06.89

(51) Int. Cl.⁴ : **G 02 B 7/18**, G 02 B 26/08,
H 01 Q 3/20

(21) Anmeldenummer : 86905789.3

(22) Anmeldetag : 20.09.86

(86) Internationale Anmeldenummer :
PCT/EP 86/00550

(87) Internationale Veröffentlichungsnummer :
WO/8702148 (09.04.87 Gazette 87/08)

(54) ANTRIEBSANORDNUNG FÜR EINEN ROTIERENDEN KIPPSPIEGEL.

(30) Priorität : 26.09.85 DE 8527426 U
16.04.86 DE 3612751

(43) Veröffentlichungstag der Anmeldung :
22.07.87 Patentblatt 87/30

(45) Bekanntmachung des Hinweises auf die Patenterteilung : 07.06.89 Patentblatt 89/23

(84) Benannte Vertragsstaaten :
AT BE CH DE FR GB IT LI LU NL SE

(56) Entgegenhaltungen :
EP--A-- 0 140 551
DE--A-- 3 237 484
US--A-- 4 295 621
US--A-- 4 379 624
US--A-- 4 439 003

(73) Patentinhaber : **Licentia Patent-Verwaltungs-GmbH**
**Theodor-Stern-Kai 1**
**D-6000 Frankfurt/Main 70 (DE)**

(72) Erfinder : **WALTHER, Gerd-Jürgen**
**Wielandstrasse 29**
**D-7900 Ulm (DE)**
Erfinder : **WECH, Herbert**
**Lauhstrasse 21**
**D-7900 Ulm (DE)**
Erfinder : **WIPPICH, Heinz-Georg**
**Beethovenstrasse 2**
**D-7913 Senden (DE)**

(74) Vertreter : **Schulze, Harald Rudolf, Dipl.-Ing. et al**
**Licentia Patent-Verwaltungs-GmbH Theodor-Stern-Kai 1**
**D-6000 Frankfurt/Main 70 (DE)**

# Beschreibung

Die Erfindung betrifft eine Antriebsanordnung für einen rotierenden Kippspiegel gemäß dem Oberbegriff des Patentanspruchs 1.

Eine derartige Anordnung ist bereits in der DE-OS 32 37 484 beschrieben, wo mittels einer Spindel ein Verstellbock parallel zur Achse einer rotierenden Welle verschiebbar ist. Auf der Welle ist eine mitrotierende Hülse angeordnet, die von dem Verstellbock axial mitverschoben wird und über Kipphebel die Axialverschiebung in eine Kippbewegung eines Spiegels oder Radarreflektors umsetzt.

Der vorliegenden Erfindung liegt die Aufgabe zugrunde, eine derartige Antriebsanordnung für einen rotierenden Kippspiegel anzugeben, die möglichst wenig Raum beansprucht.

Die Erfindung ist im Patentanspruch 1 gekennzeichnet. Die Unteransprüche enthalten vorteilhafte Ausführungsformen.

Die erfindungsgemäße Anordnung weist durch den koaxialen Aufbau ein niedriges Massenträgheitsmoment und eine kompakte Bauweise auf.

Die Erfindung ist nachfolgend anhand der Abbildungen noch veranschaulicht, die vorteilhafte Ausführungsformen der Erfindung zeigen.

Der Spiegel Sp ist auf einer Trägerplatte P1 montiert und um eine senkrecht auf der Zeichenebene stehende Achse $A_2$ kippbar. Die Kippbewegung des Spiegels ergibt sich durch eine Auf-/Ab-Bewegung der Aufhängung des Kipphebels $K_1$, der über eine Lager $L_1$ drehbar mit dem fest mit der Trägerplatte P1 verbundenen, doppelt gewinkelten Hebel $K_2$ verbunden ist. Der Hebel $K_2$ trägt auch noch Ausgleichsgewichte F als Massenausgleich des rotierenden Spiegels. Der Hebel $K_3$ ist nicht mit $K_2$ verbunden, sondern nur gleitend an diesem geführt.

Der Spiegel Sp mit Trägerplatte P1 und Hebel $K_2$ ist über die die Rotationsbewegung vermittelnde Spiegelaufhängung HS mit einer ersten Welle $W_1$ verbunden, die über Lager $L_2$, $L_3$ drehbar in einem feststehenden Gehäuse G gelagert ist.

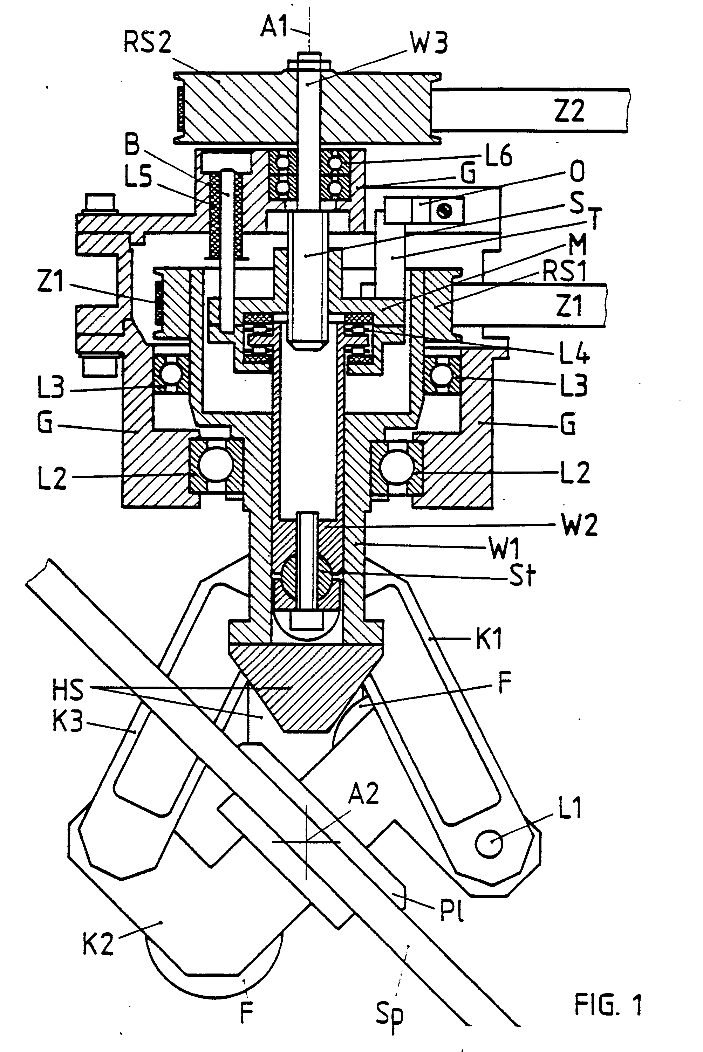

In der Ausführungsform nach FIG. 1 trägt die Welle $W_1$ eine Zahnriemenscheibe $RS_1$, über der Antrieb mittels des Zahnriemens $Z_1$ erfolgt. Im innern der hohlen Welle $W_1$ ist eine zweite Welle $W_2$ axial verschiebbar angeordnet. Die Welle $W_2$ ist an ihrem unteren Ende mit einer Strebe St verbunden, die durch Langlöcher in der ersten Welle durchgeführt ist und die die Aufhängung für die Kipphebel bildet.

Die zweite Welle $W_2$ ist über ein Axiallager $L_4$ mit einer axial verschiebbaren Vorrichtung gekoppelt und macht so deren axiale Verschiebung ist. Diese Vorrichtung besteht im wesentlichen aus einer Mutter M, die mittels eines oder mehrerer Bolzen B als Drehmomentstütze gegen Verdrehen gesichert ist. Der gezeichnete Bolzen B ist fest mit der Mutter verbunden und in einem Lager $L_5$ axial verschiebbar im Gehäuse gelagert.

Durch Drehen der Spindel S, die über eine in Lagern $L_6$ im Gehäuse drehbar gelagerte dritte Welle $W_3$ mit einer weiteren Zahnriemenscheibe $RS_2$ verbunden ist, wird die gegen Verdrehung gesicherte Mutter M je nach Drehsinn der Spindelbewegung auf oder ab bewegt und nimmt dabei die zweite Welle $W_2$ mit. Die axiale Bewegung der Welle $W_2$ wird über die Strebe St und die Hebel $K_1$, $K_2$ in eine Kippbewegung des Spiegels Sp um die Achse $A_2$ umgesetzt. Die Welle $W_1$ ist in ihrem oberen Teil erweitert, so daß die auf und ab bewegte Mutter samt dem Axiallager in dem so geschaffenen Freiraum Platz findet. Weiter ist auch die Welle $W_2$ in ihrem oberen Teil hohl, so daß die Spindel in die Welle $W_2$ eintauchen kann. Dadurch kann die Bauhöhe der Anordnung gering gehalten werden. Die Mutter trägt zusätzlich eine Marke T, die im Zusammenwirken mit einem am Gehäuse befestigten optischen Sensor O, zum Beispiel einer Lichtschranke, eine grobe Überwachung der Stellung der Spindel ermöglicht.

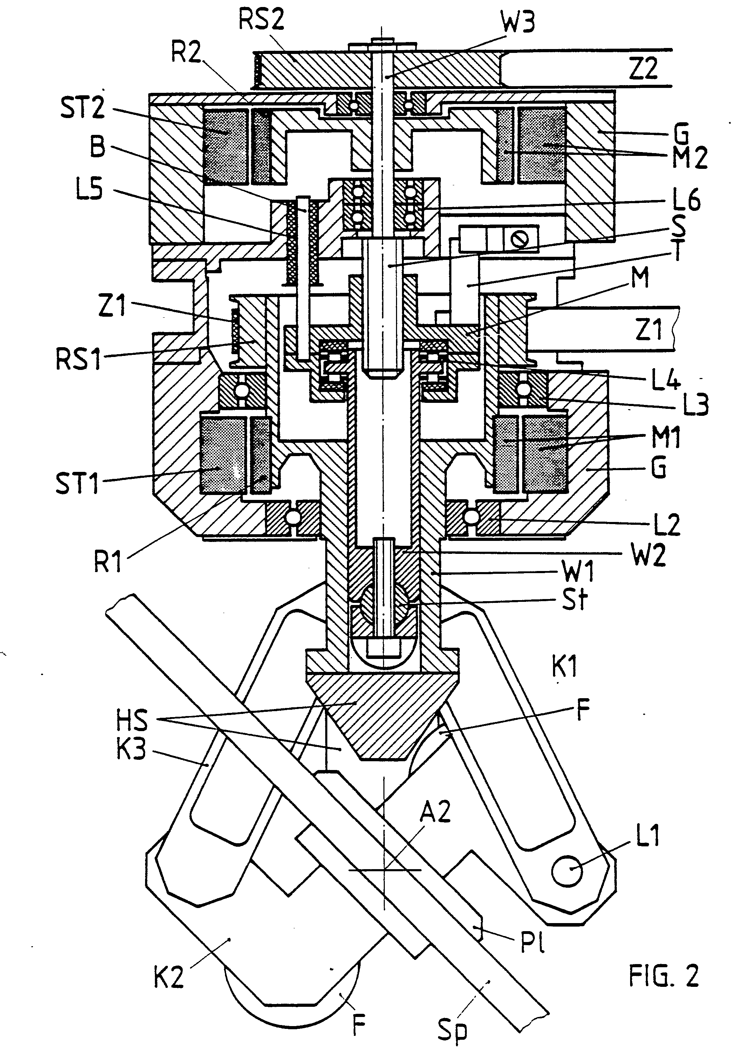

Die bevorzugte Ausführungsform nach FIG. 2 unterscheidet sich von der vorstehend beschriebenen Anordnung im wesentlichen dadurch, daß der Antrieb der ersten Welle $W_1$ und der Spindel S nicht durch außerhalb des Gehäuses G angeordnete Motoren mittels der Zahnriemen $Z_1$ und $Z_2$ erfolgt, sondern daß in das Gehäuse integrierte Hohlwellenmotoren M1 und M2 koaxial zu der ersten Welle $W_1$ und der Spindel S angeordnet sind. Der Rotor R1 des ersten Hohlwellenmotors M1 ist fest mit der ersten Welle $W_1$, der Stator ST1 mit dem Gehäuse G verbunden. Der Rotor R2 des zweiten Hohlwellenmotors M2 ist fest mit der dritten Welle $W_3$ und über diese mit der Spindel S verbunden, der Stator ST2 ist wiederum im Gehäuse G befestigt. Die Riemenscheiben RS1 und RS2 mit den Zahnriemen $Z_1$ und $Z_2$ dienen nun nicht mehr der Übertragung der Antriebskraft, sondern vermitteln die Drehung der ersten Welle $W_1$ bzw. der Spindel S auf außerhalb des Gehäuses angeordnete Winkelwertgeber. Anstelle der außen liegenden Winkelwertgeber können auch koaxial zu der ersten Welle und der Spindel angeordnete Hohlwellen-Winkelwertgeber vorgesehen sein. Die Hohlwellenmotoren sind bevorzugterweise als bürstenlose Gleichstrommotoren ausgeführt.

Die Anordnung nach FIG. 2 stimmt in den übrigen Teilen mit der Anordnung nach FIG. 1 überein und weist auch dieselben Bezugszeichen auf, so daß hierzu auf die Erläuterungen zu FIG. 1 verwiesen wird.

Die Erfindung ist in einer geringfügig abgewandelten Form auch für eine Anwendung bei einer Anordnung geeignet, bei der anstelle der Kippbewegung eine axiale Verschiebung eines rotierenden Spiegels oder Reflektors vorzunehmen ist. Anstelle der Hebel $K_1$, $K_2$, $K_3$ tritt dann eine Spiegelaufhängung und -lagerung, die eine axiale Verschiebung erlaubt.

**Patentansprüche**

1. Antriebsanordnung für einen rotierenden Kippspiegel (Sp) oder Reflektor, der um eine erste Achse (A1) rotiert und gleichzeitig um eine mitrotierende, senkrecht zur ersten Achse ausgerichtete zweite Achse (A2) kippbar ist, mit einer bezüglich eines feststehenden Gehäuses (G) rotierenden und in dem Gehäuse gelagerten ersten Welle (W1) und einer mit dieser ersten Welle mitrotierenden und bezüglich dieser mittels einer Spindel axial verschiebbaren Vorrichtung, die über Kipphebel (K1) mit einer den Kippspiegel tragenden, um die zweite Achse drehbaren Tragplatte (P1) verbunden ist, dadurch gekennzeichnet, daß die erste Welle (W1) hohl ist, daß die mitrotierende axial verschiebbare Vorrichtung als eine im Innern der ersten Welle angeordnete zweite Welle (W2) ausgebildet ist, daß koaxial zur ersten und zweiten Welle eine drehbare Spindel (S) mit einer gegen Verdrehung gesicherten axial verschiebbaren Mutter (M) angeordnet ist, und daß die Mutter und die zweite Welle über ein Axiallager (L4) in ihrer axialen Verschiebung gekoppelt sind.

2. Anordnung nach Anspruch 1, gekennzeichnet durch mit der Mutter (M) verbundene, im feststehenden Gehäuse axial verschiebbar gelagerte Bolzen (B).

3. Anordnung nach Anspruch 1 oder Anspruch 2, dadurch gekennzeichnet, daß der Antrieb der Spindel (S) und der ersten Welle (W1) als Zahnriementrieb (RS1, RS2) ausgeführt sind.

4. Anordnung nach Anspruch 1 oder Anspruch 2, dadurch gekennzeichnet, daß der Antrieb der Spindel (S) und der ersten Welle (W1) über je einen koaxial angeordneten Hohlwellenmotor (M1, M2, FIG2) erfolgt.

5. Anordnung nach Anspruch 4, dadurch gekennzeichnet, daß die Winkelstellungen der ersten Welle (W1) und der Spindel (S) über je einen Zahnriementrieb (RS1, RS2) zu seitlich des Gehäuses angeordneten Winkelwertgebern übertragen werden.

6. Anordnung nach Anspruch 4, dadurch gekennzeichnet, daß zur Ermittlung der Winkelstellungen der Spindel (S) und der ersten Welle (W1) koaxial angeordnete Hohlwellen-Winkelwertgeber vorgesehen sind.

## Claims

1. Drive arrangement for a rotating tiltable mirror (Sp) or reflector, which rotates about a first axis (A1) and is at the same time tiltable about a co-rotating second axis (A2) oriented perpendicularly to the first axis, with a first shaft (W1), which rotates with respect to a stationary housing (G) and is borne in the housing, and a device, which co-rotates with this first shaft, is axially displaceable with respect thereto by means of a spindle and is connected by way of rocker levers (K1) with a carrier plate (P1), which carries the tiltable mirror and is rotatable about the second axis, characterised thereby, that the first shaft (W1) is hollow, that the co-rotating, axially displaceable device is constructed as a second shaft (W2) arranged in the interior of the first shaft, that a rotatable spindle (S) with an axially displaceable nut (M) secured against rotation is arranged co-axially with the first and second shafts and that the nut and the second shaft are coupled in their axial displacement by way of an axial bearing (L4).

2. Arrangement according to claim 1, characterised by pins (B), which are connected with the nut (M) and borne to be axially displaceable in the stationary housing.

3. Arrangement according to claim 1 or 2, characterised thereby, that the drive of the spindle (S) and of the first shaft (W1) is constructed as toothed belt drive (RS1, RS2).

4. Arrangement according to claim 1 or 2, characterised thereby, that the drive of the spindle (S) and of the first shaft (W1) takes place by way of a respective, co-axially arranged hollow shaft motor (M1, M2).

5. Arrangement according to claim 4, characterised thereby, that the angular settings of the first shaft (W1) and of the spindle (S) are transmitted by way of a respective toothed belt drive (RS1, RS2) to angle value transmitters arranged laterally of the housing.

6. Arrangement according to claim 4, characterised thereby, that co-axially arranged hollow shaft angle value transmitters are provided for the determination of the angular setttings of the spindle (S) and of the first shaft (W1).

## Revendications

1. Dispositif d'entraînement pour un miroir pivotant (Sp) ou réflecteur tournant, qui tourne autour d'un premier axe (A1) et peut en même temps pivoter autour d'un deuxième axe (A2) et orienté perpendiculairement au premier axe et qui accompagne sa rotation, ce dispositif comprenant un premier arbre (W1) qui tourne par rapport à un boîtier fixe (6) et est tourillonné dans ce boîtier, et un dispositif accompagnant la rotation du premier arbre et qui peut être mis en translation axiale par rapport à celui-ci au moyen d'une vis et qui est relié, par l'intermédiaire de leviers de pivotement (K1), à une plaque porteuse (P1) qui porte le miroir pivotant et qui peut tourner autour du deuxième axe, caractérisé en ce que le premier arbre (W1) est creux, que le dispositif mobile en translation axiale et qui accompagne la rotation est constitué par un deuxième arbre (W2) disposé à l'intérieur du premier arbre, en ce que, coaxialement au premier arbre et au deuxième arbre, est disposée une vis rotative (S) munie d'un écrou (M) mobile en translation axiale et bloquée en rotation, et en ce que l'écrou et le deuxième arbre sont accouplés dans leur translation axiale par l'intermédiaire d'un palier axial (L4).

2. Dispositif selon la revendication 1, caractérisé par des tiges (B) solidaires de l'écrou (M) et qui sont montées mobiles en translation axiale dans le boîtier fixe.

3. Dispositif selon la revendication 1 ou la revendication 2, caractérisé en ce que l'entraînement de la vis (S) et celui du premier arbre (W1) sont constitués par des transmissions à courroie crantée (RS1, RS2).

4. Dispositif selon la revendication 1 ou la revendication 2, caractérisé en ce que l'entraînement de la vis (S) et celui du premier arbre (W1) sont assurés chacun par un moteur à arbre creux disposé coaxialement.

5. Dispositif selon la revendication 4, caractérisé en ce que les positions angulaires du premier arbre (W1) et de la vis (S) sont transmises à des capteurs de valeurs angulaires disposés latéralement au boîtier, chacune par l'intermédiaire d'une transmission à courroie crantée (RS1, RS2).

6. Dispositif selon la revendication 4, caractérisé en ce que, pour capter les positions angulaires de la vis (S) et du premier arbre (W1), il est prévu des capteurs de valeurs angulaires à arbres creux disposés coaxialement.

EP 0 229 179 B1

FIG. 1

EP 0 229 179 B1

FIG. 2